# EUROPEAN PATENT SPECIFICATION

(11) **EP 2 204 035 B1**
(45) Date of publication and mention of the grant of the patent: **08.07.2015**
(21) Application number: 07821340.2
(22) Date of filing: 15.10.2007
(51) Int. Cl.: H04L 29/06

(54) **IP multimedia subsystem service configuration**
IP-Multimedia-Subsystem-Dienstkonfiguration
Configuration de service de sous-système multimédia IP

(43) Date of publication of application: 07.07.2010
(73) Proprietor: Telefonaktiebolaget LM Ericsson (publ), 164 83 Stockholm (SE)
(72) Inventor: FORSBERG, Mikael, SE-135 40 Tyresö (SE); HERVE, Dominique, Roxboro H8Y 3R8 Quebec (CA); VAN ELBURG, Hans-Erik, NL-4907 Dm Oosterhout (NL)
(74) Representative: Lind, Robert
(86) International application number: PCT/EP2007/060973
(87) International publication number: WO 2009/049664

(56) References cited:
- HEWLETT-PACKARD DEVELOPMENT COMPANY: "HP OpenCall XML Document Management Server Software" INTERNET ARTICLE, [Online] 1 July 2006 (2006-07-01), pages 1-6, XP002488161 Internet Retrieved from the Internet: URL:http://h20208.www2.hp.com/opencall/pro ducts/mobility/ocxdms/ds/ocxdms_ds.pdf> [retrieved on 2008-07-14]
- ROSENBERG CISCO J: "The Extensible Markup Language (XML) Configuration Access Protocol (XCAP); rfc4825.txt" IETF STANDARD, INTERNET ENGINEERING TASK FORCE, IETF, CH, 1 May 2007 (2007-05-01), XP015052396 ISSN: 0000-0003
- OPEN MOBILE ALLIANCE (OMA): "XML Document Management (XDM) Specification Candidate Version 1.0 - 14 Mar 2006" INTERNET CITATION, [Online] XP002399040 Retrieved from the Internet: URL:http://www.openmobilealliance.org/rele ase_program/docs/CopyrightClick .asp?pck=XDM&file=V1_0-20060314-C/OMA-TS-X DM_Core-V1_0-20060314-C.pdf> [retrieved on 2006-09-14]

## Description

### Technical Field

The present invention relates to the configuration of IP Multimedia Subsystem services and in particular to the configuration of such services by users across the Ut interface.

### Background

IP Multimedia services provide a dynamic combination of voice, video, messaging, data, etc. within the same session. By growing the number of basic applications and the media which it is possible to combine, the number of services offered to the end subscribers will grow, and the inter-personal communication experience will be enriched. This will lead to a new generation of personalised, rich multimedia communication services, including so-called "combinational IP Multimedia" services.

IP Multimedia Subsystem (IMS) is the technology defined by the Third Generation Partnership Project (3GPP) and ETSI TISPAN group to provide IP Multimedia services over mobile communication networks (3GPP TS 22.228, TS 23.228, TS 24.229, TS 29.228, TS 29.229, TS 29.328 and TS 29.329 Releases 5 to 7, and TS24.173 Release 7). IMS provides key features to enrich the end-subscriber person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between subscriber terminals (or subscriber terminals and application servers). The Session Description Protocol (SDP), carried by SIP signalling, is used to describe and negotiate the media components of the session. Whilst SIP was created as a subscriber-to-subscriber protocol, IMS allows operators and service providers to control subscriber access to services and to charge subscribers accordingly.

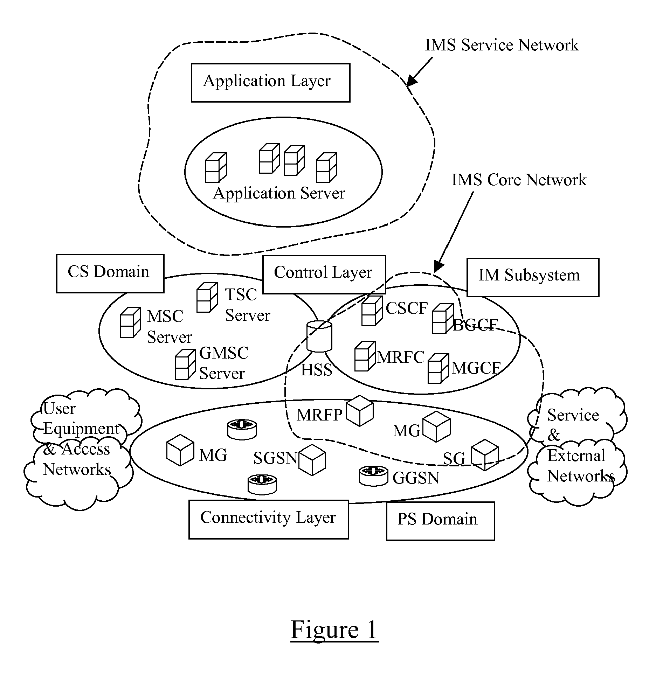

By way of example, Figure 1 illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the subscriber that the subscriber is subscribed to; and the Interrogating CSCF (I-CSCF) whose role is to identify the correct S-CSCF and to forward to that S-CSCF a request received from a SIP terminal via a P-CSCF.

Within the IMS service network, Application Servers (ASs) are provided for implementing IMS service functionality. Application Servers provide services to end users in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment (or indeed for the purpose of any SIP method, session or non-session related). The IFCs are received by the S-CSCF from an HSS during the IMS registration procedure as part of a subscriber's Subscriber Profile.

A Ut interface (or more correctly "reference point") has been specified between the AS and the subscriber terminal (TS23.002). The Ut interface enables a subscriber to manage information relating to his or her services, e.g. creation and assignment of Public Service Identities, management of authorisation policies that are used for example by presence services, conference policy management, etc.

The Ut interface allows in particular a subscriber to manipulate XML data associated with an AS and which defines how certain services are provisioned to that subscriber. XML documents are handled by XML Document Management Servers (XDMS) which are typically co-located with ASs. For example, an XDMS responsible for handling service data relating to Multimedia Telephony services might be co-located with a Multimedia Telephony Application Server (MTAS). In use, an XDMS stores service data into the HSS (as transparent data) which is then retrieved by the AS at service invocation.

ETSI TISPAN has adopted the XML Configuration Access Protocol (XCAP), as specified in IETF RFC4825, for use over the Ut interface and which facilitates the use of http methods, i.e. GET, PUT, and DELETE, to operate on XML data stored in the HSS, via an XDMS. ETSI 183 023 presents a refined XCAP protocol for manipulating data relating specifically to PSTN/ISDN simulation services that will be provisioned within Next Generation Networks (NGN). Such services include for example voice mail, call forwarding, call barring, etc, with each service being defined within the standard by an XML "schema" which represents an XML template for incorporation into subscriber XML documents.

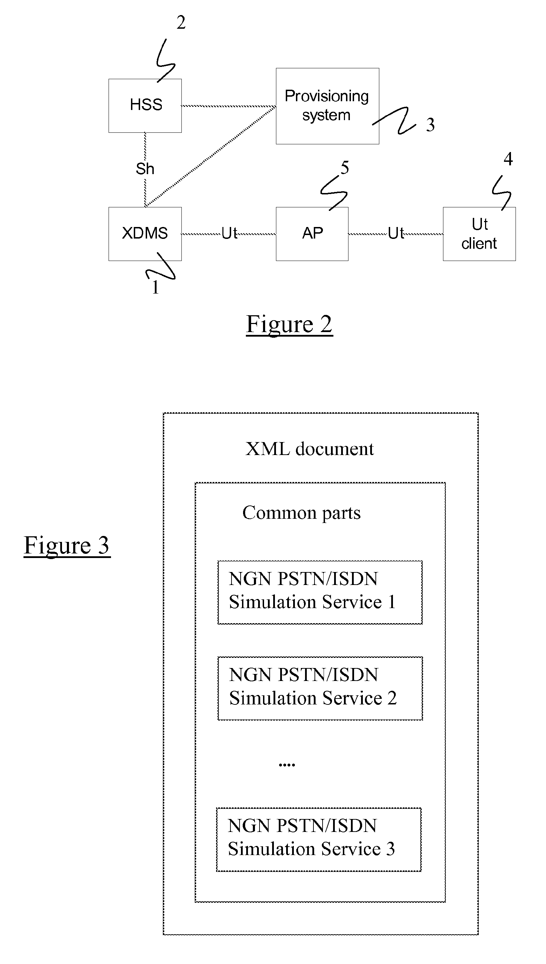

Figure 2 illustrates schematically the IMS management network in this regard. The XML documents defining customer services and settings are handled by the XDMS 1. A so-called "Sh" interface allows the XDMS to communicate with the Home Subscriber Server (HSS) 2. A provisioning system 3 allows a network operator to initially install pre-configured XML data, based upon the standardised XML schema, on a per-subscriber basis into the HSS, and to subsequently amend the installed XML data via the XDMS. The management network additionally provides a mechanism whereby a subscriber can edit his/her associated XML document. For this purpose, a Ut client 4 is installed within the subscriber equipment or UE. As discussed above, the Ut client uses the XCAP protocol to retrieve (either the whole document or a fragment thereof) and amend the XML document (or fragment). It will be appreciated that the XDMS reacts to a retrieval request from a UE by obtaining the relevant XML data from the HSS and delivering this to the UE over the Ut interface.

An Aggregation Proxy (AP) 5 is arranged to "intercept" XCAP traffic flowing between the Ut client 4 and the XDMS. The role of the AP is firstly to authenticate subscriber originating requests and in particular to determine if a particular user has the right to access the XDMS. Secondly, the AP provides a common point of connection for a Ut client, distributing XCAP requests to appropriate XDMSs.

The Ut client fetches the stored data from the XDMS by sending a XCAP GET request to the XDMS over the Ut interface (assuming authorisation by the AP and redirection by any aggregation point). The XDMS fetches the data from the HSS over the Sh interface and sends it back to the Ut client in a Ut response message. The Ut client displays information and options to the user via a Graphical User Interface (GUI). Typically, the GUI is preconfigured to present certain information depending upon the data received. Whilst the XDMS is able to allow and reject requests by a subscriber to change the XML data, as currently defined the relevant standard does not have any mechanism to limit the possible conditions that can be accessed by the subscriber. That is to say that a subscriber can download his or her XML document relating to a service set, with the GUI rendering that to the user including displaying all service settings, regardless of whether or not the XDMS will actually accept a request to change those settings. Such an approach will inevitably result in unhappy and confused users.

The document published by Hewlett-Packard entitled "HP OpenCall XML Document Management Server Software, Internet article, July 2006, pages 1 to 6, describes an XDMS that stores and manages service group membership information using standards-based interfaces. Mechanisms for reading, writing, and modifying XML documents across a network are also described in the following document:
ROSENBERG CISCO J: "The Extensible Markup Language (XML) Configuration Access Protocol (XCAP); rfc4825.txt" IETF STANDARD, INTERNET ENGINEERING TASK FORCE, IETF, CH, 1 May 2007 (2007-05-01), and
OPEN MOBILE ALLIANCE (OMA): "XML Document Management (XDM) Specification Candidate Version 1.0 - 14 Mar 2006" INTERNET CITATION.

### Summary

In order to address the problem identified above, it is proposed to introduce into the XML document structure (i.e. the standardised schema) an informational element or elements which identifies (identify) the conditions that a subscriber is allowed to change. The elements are interpreted by the GUI at the subscriber terminal, and only those conditions that are changeable are displayed.

According to a first aspect of the present invention there is provided a method of controlling the presentation of user changeable IP Multimedia Subsystem service conditions at a user terminal comprising a Ut client, where service conditions are defined by respective rule sets within an XML document maintained within the IP Multimedia Subsystem network and available to the user terminal via a Ut interface. The method is characterised by the steps of including within the XML document one or more informational elements identifying which service conditions the user may change and those service conditions for which change is disallowed. The method is further characterised by delivering the XML document to the Ut client over the Ut interface and, upon receipt of the XML document or a fragment thereof at the Ut client of the user terminal, interpreting said informational element(s) and presenting to the subscriber using a Graphical User Interface only those conditions that are identified as service conditions which the user may change.

Embodiments of the present invention provide a mechanism for preventing those conditions which are not changeable from being displayed to a user, or at least for preventing them from being displayed as changeable conditions. Thus, a subscriber will not attempt to change, unchangeable conditions, and subscriber frustration will be avoided.

According to a second aspect of the present invention there is provided a user terminal for use with an IP Multimedia Subsystem network and comprising a Ut client for interacting with an XDMS server of the IP Multimedia Subsystem network. The terminal comprises a Graphical User Interface and is characterised in that the Graphical User Interface is arranged to present to a user, IP Multimedia Subsystem service conditions based upon an informational element or elements contained within an XML document or document fragment delivered to the Ut client of the terminal over the Ut interface, the element(s) specifying which service conditions the user may change and service conditions for which change is disallowed, the Graphical User Interface displaying only those conditions that are identified in the XML document as service conditions which the user may change.

### Brief Description of the Drawings

Figure 1 illustrates schematically the integration of an IP Multimedia Subsystem into a 3G mobile communications system;
Figure 2 illustrates schematically an IMS management network architecture according to the prior art;
Figure 3 illustrates schematically the structure of an XML document maintained in an XDMS of the management network architecture of Figure 2;
Figure 4 illustrates schematically a UE;
Figure 5 is a flow diagram illustrating a process of identifying changeable conditions to the Ut client;

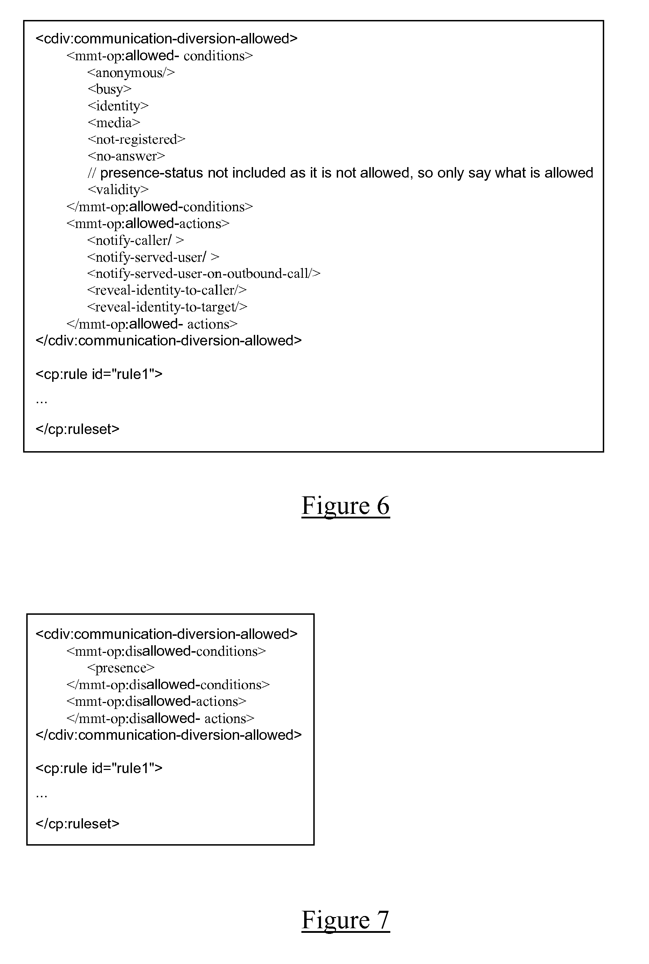

Figure 6 shows a part of an XML document containing additional informational elements; and specifying PSTN/ISDN simulation services provisioned for that subscriber. Each available simulation service is specified within an XML document according to an XML "schema" (the schemas being defined in the relevant standard). In addition, an XML document may contain a "common parts" section (again according to the standardised common parts) which is imported into each of the service specific schemas. The XML document structure is illustrated in Figure 3. The XCAP protocol is used by a Ut client (at the UE) to access and change the various sections presented within his or her XML document(s).

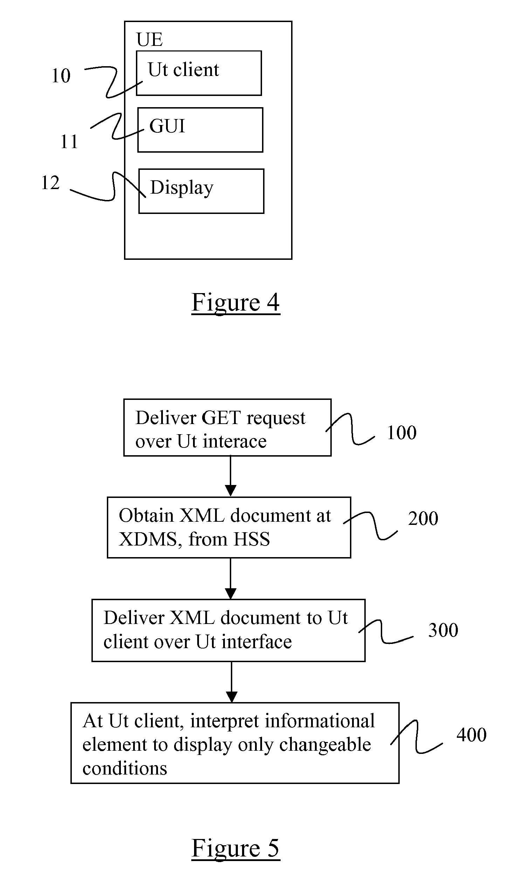

It is proposed here to extend the standardised service schema with additional information elements that indicate which conditions a subscriber may change. The GUI provided at the subscriber terminals (UEs) is able to interpret the information element(s) contained within a retrieved XML document or document fragment, and display to the subscriber only those conditions that can be changed. If this extension parameter is not included then the Ut client will present all available options for a given service, ensuring that Ut clients supporting the extensions are compatible with XDMSs that do not. The extension shall be added so that legacy Ut clients not supporting this extension do not reject a response originating at an XDMS that does support the extension. It is noted that if a Ut client does not support the extension and seeks to change a service condition that the subscription does not allow, the XDMS will reject that request according to conventional practice. A general architecture for the UE is illustrated in Figure 4 and comprises a Ut client 10, a GUI 11, and a display 12.

Figure 5 is a flow diagram illustrating the main steps associated with presenting changeable conditions to the subscriber, namely:
Step 100) Send GET request from Ut client to XDMS over Ut interface;
Step 200) Receive GET request at XDMS and obtain XML document from HSS of Sh interface;
Step 300) Deliver XML document to Ut client over Ut interface; and
Step 400) At Ut client, identify changeable conditions using informational element(s), and display conditions.

Figure 6 shows a section of an XML document associated with a particular subscriber and which defines conditions for a call diversion ("cdiv") service. According to the conventional document structure, the document defines a rule set for the service, including "Rule1", etc. In addition, the document contains an informational element listing those conditions and actions for the service which the subscriber is allowed to change. The GUI at the Ut client is able to understand this new element, and will display a user interface as appropriate.

Figure 7 illustrates an optimised XML structure according to which the informational element lists only disallowed conditions and actions. In this example, the only condition which the user is prevented from changing is the "presence" condition. The GUI at the Ut client will therefore present all other actions and conditions to the subscriber as changeable.

It will be appreciated by the person of skill in the art that various modifications may be made to the above described embodiment without departing from the scope of the present invention.

## Claims

1. A method of controlling the presentation of user changeable IP Multimedia Subsystem service conditions at a user terminal comprising a Ut client, where service conditions are defined by respective rule sets within an XML document maintained within the IP Multimedia Subsystem network and available to the user terminal via a Ut interface, the method being **characterised by** the steps of:
including within the XML document one or more informational elements identifying which service conditions the user may change and those service conditions for which change is disallowed;
delivering the XML document to said Ut client over the Ut interface; and
upon receipt of the XML document or a fragment thereof at the Ut client of the user terminal, interpreting said informational element(s) and presenting to the subscriber using a Graphical User Interface only those conditions that are identified as service conditions which the user may change.

2. A method according to claim 1, wherein said XML document or fragment thereof is delivered to the user terminal by an XDMS server over a Ut interface of the IP Multimedia Subsystem network.

3. A method according to any one of the preceding claims, wherein said XML document is stored as transparent data within a Home Subscriber Server of the IP Multimedia Subsystem network.

4. A user terminal for use with an IP Multimedia Subsystem network and comprising a Ut client for interacting with an XDMS server of the IP Multimedia Subsystem network, the terminal comprising a Graphical User Interface and being **characterised in that** the Graphical User Interface is arranged to present to a user, IP Multimedia Subsystem service conditions based upon an informational element or elements contained within an XML document or document fragment delivered to the Ut client of the terminal over the Ut interface, the element(s) specifying which service conditions the user may change and service conditions for which change is disallowed, the Graphical User Interface displaying only those conditions that are identified in the XML document as service conditions which the user may change.

## Patentansprüche

1. Verfahren zum Steuern der Präsentation von Benutzer-veränderbaren IP-Multimedia-Subsystem-Dienstbedingungen an einem Benutzerendgerät, umfassend einen Ut-Client, wobei Dienstbedingungen durch jeweilige Regelsätze in einem XML-Dokument, das in dem IP-Multimedia-Subsystem-Netzwerk geführt wird und für den Benutzer über eine Ut-Schnittstelle verfügbar ist, definiert werden, das Verfahren durch die folgenden Schritte gekennzeichnet:
Aufnehmen, in dem XML-Dokument, eines oder mehrerer informativer Elemente, die identifizieren, welche Dienstbedingungen der Benutzer verändern kann, und diejenigen Dienstbedingungen, für die eine Veränderung unzulässig ist;
Liefern des XML-Dokuments an den Ut-Client über die Ut-Schnittstelle; und
nach Empfangen des XML-Dokuments oder eines Teils davon an dem Ut-Client des Benutzerendgeräts, Interpretieren des oder der informativen Elemente und Präsentieren, für den Teilnehmer, unter Verwendung einer grafischen Benutzerschnittstelle nur derjenigen Bedingungen, die als Dienstbedingungen identifiziert wurden, die der Benutzer verändern kann.

2. Verfahren nach Anspruch 1, wobei das XML-Dokument oder der Teil davon dem Benutzerendgerät von einem XDMS-Server über eine Ut-Schnittstelle des IP-Multimedia-Subsystem-Netzwerks geliefert wird.

3. Verfahren nach einem der vorstehenden Ansprüche, wobei das XML-Dokument als transparente Daten in einem Heim-Teilnehmer-Server des IP-Multimedia-Subsystem-Netzwerks gespeichert wird.

4. Benutzerendgerät zur Verwendung mit einem IP-Multimedia-Subsystem-Netzwerk und umfassend einen Ut-Client zum Interagieren mit einem XDMS-Server des IP-Multimedia-Subsystem-Netzwerks, wobei das Endgerät eine grafische Benutzerschnittstelle umfasst und **dadurch gekennzeichnet ist, dass** die grafische Benutzerschnittstelle angeordnet ist, einem Benutzer IP-Multimedia-Subsystem-Dienstbedingungen basierend auf einem oder mehreren informativen Elementen, die in einem XML-Dokument oder Teildokument, das dem Ut-Client des Endgeräts über die Ut-Schnittstelle zugestellt wurde, enthalten sind, zu präsentieren, wobei das oder die Elemente spezifizieren, welche Dienstbedingungen der Benutzer verändern kann, und die Dienstbedingungen, für die eine Veränderung unzulässig ist, wobei die grafische Benutzerschnittstelle nur diejenigen Bedingungen anzeigt, die in dem XML-Dokument als Dienstbedingungen identifiziert werden, die der Benutzer verändern kann.

## Revendications

1. Procédé de commande de la présentation de conditions de service d'un sous-système multimédia IP pouvant être modifiées par un utilisateur au niveau d'un terminal d'utilisateur comprenant un client Ut, dans lequel des conditions de service sont définies par des ensemble de règles respectifs dans document XML conservé au sein du réseau de sous-système multimédia IP et disponible pour le terminal d'utilisateur par l'intermédiaire d'une interface Ut, le procédé étant **caractérisé par** les étapes consistant à :
inclure au sein du document XML un ou plusieurs éléments d'information identifiant les conditions de service que l'utilisateur peut modifier et les conditions de service pour lesquelles une modification n'est pas autorisée ;
fournir le document XML audit client Ut par l'intermédiaire de l'interface Ut ; et
à réception du document XML ou d'un fragment de celui-ci au niveau du client Ut du terminal d'utilisateur, interpréter ledit ou lesdits élément(s) d'information et
ne présenter au souscripteur, en utilisant une interface d'utilisateur graphique, que les conditions qui sont identifiées comme étant des conditions de service que l'utilisateur peut modifier.

2. Procédé selon la revendication 1, dans lequel ledit document XML ou fragment de celui-ci est fourni au terminal d'utilisateur par un serveur XDMS par l'intermédiaire d'une interface Ut du réseau de sous-système multimédia IP.

3. Procédé selon l'une quelconque des revendications précédentes, dans lequel ledit document XML est stocké en tant que données transparentes au sein d'un serveur de souscripteur domestique du réseau de sous-système multimédia IP.

4. Terminal d'utilisateur pour une utilisation avec un réseau de sous-système multimédia IP et comprenant un client Ut permettant d'interagir avec un serveur XDMS du réseau de sous-système multimédia IP, le terminal comprenant une interface d'utilisateur graphique et étant **caractérisé en ce que** l'interface d'utilisateur graphique est agencée pour présenter des conditions de service de sous-système multimédia IP à un utilisateur en se basant sur un ou des élément(s) d'information contenu(s) au sein d'un document XML ou d'un fragment de document fourni au client Ut du terminal par l'intermédiaire de l'interface Ut, le(s) élément(s) spécifiant les conditions de service que l'utilisateur peut modifier et les conditions de service pour lesquelles une modification n'est pas autorisée, l'interface d'utilisateur graphique n'affichant que les conditions qui sont identifiées dans le document XML comme étant des conditions de service que l'utilisateur peut modifier.
